# EUROPEAN PATENT SPECIFICATION

(11) **EP 1 202 928 B1**
(45) Date of publication and mention of the grant of the patent: **09.12.2009**
(21) Application number: 00965567.1
(22) Date of filing: 26.07.2000
(51) Int. Cl.: C01B 3/38

(54) **PROCESS FOR PRODUCING SYNGAS IN A SHORT CONTACT TIME REACTOR USING CATALYTIC PARTIAL OXIDATION OF HYDROGEN SULFIDE**
VERFAHREN ZUR HERSTELLUNG VON SYNTHESEGAS IN EINEM REAKTOR MIT KURZER VERWEILZEIT UNTER VERWENDUNG DER KATALYTISCHEN TEILOXIDATION VON SCHWEFELWASSERSTOFF
PROCEDE SERVANT A PRODUIRE UN GAZ DE SYNTHESE DANS UN REACTEUR PRESENTANT UNE DUREE DE CONTACT COURTE AU MOYEN D'UNE OXYDATION CATALYTIQUE PARTIELLE DE SULFURE D'HYDROGENE

(30) Priority: 30.07.1999 US 146635 P; 25.07.2000 US 625710
(43) Date of publication of application: 08.05.2002
(73) Proprietor: ConocoPhillips Company, Houston, Texas 77210-4783 (US)
(72) Inventor: KELLER, Alfred, Ponca City, OK 74604 (US)
(74) Representative: Towler, Philip Dean
(86) International application number: PCT/US2000/040489
(87) International publication number: WO 2001/009032

(56) References cited:
- US-A- 4 891 187
- US-A- 5 654 491

## Description

### BACKGROUND OF THE INVENTION

### Technical Field of the Invention

The present invention generally relates to processes for the catalytic oxidation of light hydrocarbons to synthesis gas (syngas), and more particularly to methods of increasing the yield of syngas in processes employing partial oxidation of methane or natural gas to products containing CO and H₂- Still more particularly, the processes of the present invention relate to such methods in which the concurrent oxidation reaction (i.e., the complete combustion of methane to carbon dioxide and water) is replaced with combustion of hydrogen sulfide to sulfur and water,to improve the yield of synthesis gas.

### Description of Related Art

Many refineries face an abundant supply of lower alkanes, *i.e.,* C₁-C₄ alkanes such as methane, and relatively few means of converting them to more valuable products. Much research has _ been devoted to investigating the conversion of methane to more easily transportable products. One technique that has been well-developed entails the partial oxidation of light hydrocarbons in the presence of a catalyst. This technique results in the production of synthesis gas, *i.e*., "syngas", a mixture of carbon monoxide and hydrogen. The catalytic partial oxidation of methane can be represented by the following reaction scheme:

CH₄+ 1/2O₂ → CO+₂H₂ (1)

At the same time, some of the methane burns completely, according to the equation:

CH₄+2O₂→CO₂ + 2H₂O (2)

Hence, syngas is typically a mixture of carbon monoxide and molecular hydrogen, generally having a hydrogen to carbon monoxide molar ratio in the range of 1:5 to 5:1, and which may contain other gases such as carbon dioxide.

Synthesis gas has utility as a feedstock for conversion to alcohols, olefins, or saturated hydrocarbons (paraffins) according to the well-known Fischer-Tropsch process, and by other means. Synthesis gas is not a commodity; instead, it is typically generated on-site for further processing. The uses for syngas include, but are not limited to, a feedstock for conversion to high molecular weight (*e.g*. C₅₀₊) paraffins, which in turn provide an ideal feedstock for hydrocracking, a feedstock for conversion to high quality jet fuel, and superior high octane value diesel fuel blending components. Another potential application of synthesis gas is for large-scale conversion to methanol.

Syngas generation from methane typically takes place by one of three techniques. Steam reforming of methane is the most common, followed by partial oxidation, and autothermal reforming. Emerging technologies that have been developed to generate syngas from methane include a technique that entails exposing a mixture of methane and oxygen to a hot catalyst for a brief time, typically on the order of milliseconds or less, followed by cooling of the resultant gas stream. EP 303,438 describes a process for synthesis gas production by catalytic partial oxidation to overcome some of the disadvantages and costs of steam reforming. A monolith catalyst is used with or without metal addition to the surface of the monolith and the process operates at space velocities of 20,000-500,000 hr-1. Conventional catalytic partial oxidation processes are also described in U.S. Patent Nos. 5,654,491 and 5,639,929.

Although in conventional syngas generation systems the syngas reaction is shelf-sustaining once initiated, it has been shown that 10- 15 % of the carbon initially present as methane can be lost to the formation of CO₂ in combustion via equation (2) above. This directly reduces the yield off syngas that can be obtained. Hence, it is desirable to provide a syngas generation system that allows a betted yield of carbon monoxide and hydrogen.

In a related aspect of petroleum refining, many petroleum feed streams and separated fractions contain sulfur. Sulfur is typically undesirable in most petroleum refining processes and products. Therefore, refineries typically upgrade the quality of the various petroleum fractions by removing the sulfur. Specifically, hydrodesulfurization units are used to break down the sulfur compounds in the petroleum fractions and convert the sulfur to H₂S. In addition to hydrodesulfurization processes, other conversion processes in a typical refinery, such as fluid catalytic cracking, coking, visbreaking, and thermal cracking, produce H₂S from sulfur containing petroleum fractions. The H₂S from both the desulfurization processes and these conversion processes is typically removed from the gas streams or light liquid hydrocarbon streams using either chemical solvents based on alkanolamine chemistry or physical solvents. A circulating, regenerative H₂S removal system employing an absorption stage for H₂S pickup and a regeneration stage for H₂S rejection produces a concentrated stream of H₂S.

In conventional systems, this H₂S stream is then fed to a H₂S conversion unit, which converts the H₂S into a storable, saleable product such as elemental sulfur, sodium hydrosulfide solution, or sulfuric acid. Conversion of the H₂S to elemental sulfur is most common, mainly because elemental sulfur is the most marketable sulfur compound of thosetypically produced.

The process most commonly used to recover elemental sulfur from H₂S gas is the modified Claus sulfur recovery process. The conventional Claus process is well known in the art, and is also deserved in U.S. Pat. App. No. 09,624,715 and in WO 01/09034, entitled *"Process for Recovery of Sulfur From H₂S Using Short Contact Time Partial Oxidation".*

### SUMMARY OF THE INVENTION

The present invention provides a method for improving the yield of syngas generation by substituting H₂S partial oxidation for methane combustion in a syngas reactor. The partial oxidation of H₂S provides the heat necessary to sustain the syngas reaction at the desired temperature without consuming the methane. Hence, less methane is lost to complete combustion and yield of the product is increased. The method of the invention provides the partial oxidation of H₂S in which H₂S is oxidized to give elemental sulfur and water. The gases leaving the syngas generation system are treated further so as to increase the yield of elemental sulfur.

In accordance with the present invention, there is provided a method for improving the yield of a syngas generation system, comprising providing a first gas stream comprising a light hydrocarbon, mixing a second gas stream comprising H₂S with the first gas stream to form a feed gas stream, mixing the feed stream with an oxygen containing stream, then contacting the feed gas stream with a hot catalyst to form a product stream, and removing syngas and elemental sulfur from the product stream.

A preferred embodiment comprises providing a first gas stream comprising a light hydrocarbon, mixing a second gas stream comprising H₂S with the first gas stream to form a feed gas stream, while maintaining said feed gas stream below 500 degrees C, contacting the feed gas stream with a hot catalyst to form a product stream wherein less than 10% of the light hydrocarbon is converted to carbon dioxide, and removing syngas and elemental sulfur from the product stream.

The present invention also provides a system for the partial oxidation of light hydrocarbon, comprising a hydrocarbon injection line, an H₂S injection line in communication with said hydrocarbon injection line, an oxygen injection line in communication with said hydrocarbon injection line, a reaction zone receiving gases from said hydrocarbon, H₂S and oxygen injection lines and including a catalyst suitable for catalyzing said hydrocarbon to form CO and H₂ and for catalyzing the oxidation of said H₂S to form elemental sulfur and water. The system additionally comprises a mixing zone upstream of said reaction zone for receiving gases from said hydrocarbon, oxygen and H₂S lines; a cooling zone comprising a firetube boiler downstream of said reaction zone; and a sulfur condenser downstream of said boiler.

### BRIEF DESCRIPTION OF THE DRAWINGS

For a more detailed description of the presentinvention, reference will now be made to the accompanying drawings, wherein:
Fig. 1 is an enlarged cross-section of a rector constructed in accordance with a preferred embodiment; and
Fig. 2 is a schematic diagram of the components of one preferred embodiment of the present system including the reactor of Fig. 1.

### DETAILED DESCRIPTION OF THE PREFERRED EMBODIMENTS

Several schemes for carrying out partial oxidation are known in the art. As discussed above, one scheme for carrying out the exothermic oxidation reaction entails a brief exposure of the methane feed to a hot catalyst followed by cooling the resultant gas stream. The hot catalyst is positioned in the flow path of the feed gas. The catalyst comprises a wire gauze, several layers of wire gauze, or a porous ceramic. The catalyst is designed so that only a first fraction of the feed gas contacts the catalyst, while the balance of the gas serves to quickly cool the first fraction and prevent the oxidation reaction from proceeding too far.

According to the present invention, a stream of H₂S is added to the feed stream of the syngas generation system The feed stream comprises methane or a similar light hydrocarbon. Pure oxygen is preferably mixed with the gas feed immediately before contacting the feed gases with a catalyst. Air, or a mixture of air and oxygen can be substituted for the pure oxygen. The H₂S reacts with oxygen in the stream according to the reaction:

H₂S + ½ O₂ → 1/x Sₓ + H₂O (3)

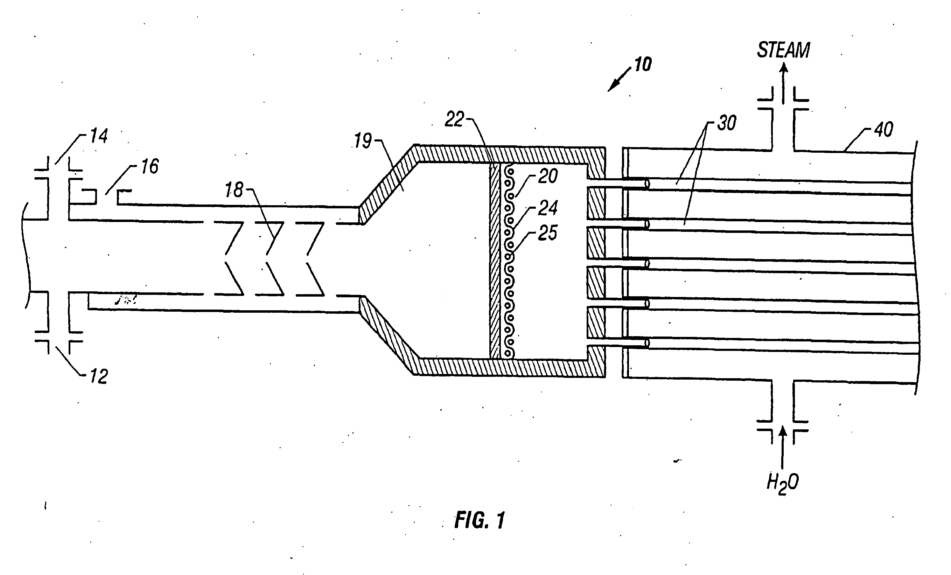

According to the present invention, H₂S partial oxidation is incorporated into the syngas generation scheme as follows. Referring initially to Figure 1, a preferred embodiment of the present system includes a reactor 10 that includes feed injection openings 12, 14, and 16, a mixing zone 19, a reaction zone 20 and a cooling zone 30. Reaction zone 20 preferably includes a thermal radiation barrier 22 positioned immediately upstream of a catalytic device 24. Radiation barrier 22 is preferably a porous ceramic or refractory material that is suited to withstand operating temperatures and provide sufficient thermal insulation, such as are described in U.S. Patent 4,038,036 to Beavon.

Catalytic device 24 is preferably a layer or layers of wire gauze 25 or a porous ceramic monolith (not shown) having a suitable catalyst supported on its surface. Gauze 25 is preferably one or more layers of a substantially planar, flexible woven metal-containing or metal-coated screen or gauze having about 0.841-0.122 mm sieve opening; 0.510-0.089 mm nominal wire diameters (20-120 mesh). More preferably, it is a gauze of metal wires about 25 micrometers to about 2.5 millimeters in diameter, which are made of about 87-93% by weight (wt-%) Pt and about 7-13 wt-% Rh. Alternative catalyst structures could include a disk with multiple perforations formed there through, a honeycomb-like structure, an etched foil and any other structure that provides the desired amount of transparency to effect the desired partial oxidation. A detailed discussion of the catalyst structure and composition can be found in U.S. Patent No. 5,654,491 to Goetsch et al.

Examples of suitable catalysts that can be included in the metal of the gauze or incorporated at its surface include, but are not limited to, platinum, rhodium, iridium, nickel, palladium, iron, cobalt, rhenium, rubidium, Pd-La₂O₃, Pt/ZrO₂, Pt/Al₂O₃

In operation, a light hydrocarbon, such as methane, is fed into one of the feed injection openings 12. H₂S is fed into a second feed injection opening 14. Air or oxygen is fed into the third feed injection opening 16, which is preferably positioned close to catalyst 24. It will be understood that the feed injection openings can be configured differently from the configuration shown without affecting the principles or operation of the present system.

As the feed gases from feed injection openings 12, 14, 16 flow toward catalytic device 24, they are preferably subjected to thorough mixing by static mixer 18. During mixing, they are shielded by radiation barrier 22 from radiant heat that is generated downstream in the process. It is preferred that the temperature on the upstream side of barrier 22 be in the range of about 20°C to about 300°C. The feed gas stream is preferably at ambient temperature prior to contact with the catalyst. Preheating the feed gas stream is not desired, as it can cause homogeneous reactions and reduce the selectivity of the process of the present invention for the desired compounds. Therefore, preheating the feed gas mixture is typically avoided, although in some applications feed gas temperatures up to about 300° C can be tolerated.

After the gases pass barrier 22, they flow past catalytic device 24 and are simultaneously heated to an oxidation temperature in the range of from about 900 °C to about 1300 °C. The gas flow rate is preferably maintained such that the contact time for the portion of the gasthat contacts the catalyst is from about 0.001 to 0.01 seconds and more preferably from about 0.001 to 0.005 seconds.

This degree of contact produces a favorable balance between competing reactions and produces sufficient heat to maintain the catalyst at the desired temperature. Specifically, sulfur is produced by catalyzed partial oxidation according to equation (3) above, where x equals 2, 6, or 8, with x = 2 being the most likely. At the same time, exposure to the hot catalyst and oxygen partially oxidizes the hydrocarbons in the feed, according to the equation:

CH₄ + ½ O₂ → CO+2H₂ (4) (4)

Oxygen for these reactions comes from the air, oxygen, or air/oxygen mix that is fed into the system with the H₂S and hydrocarbon feed gases.

Typically, the catalyst structure is heated as a result of the exothermic chemical reactions occurring at its surface; however, it can additionally or alternatively be heated by external means, such as electrical resistance, magnetic induction, RF, etc. Heating by external means can allow for increases in the rate at which feed gas can be passed through the catalyst structure while still obtaining desirable reaction products. In many cases it is helpful to heat the catalytic device 24 with external means at least at the start of the process, so as to initiate the exothermic reactions on the catalyst structure. This initial heating can be accomplished in any suitable manner including electrical resistance, magnetic induction, RF, or the like. Once the system is running, it is preferably run adiabatically or nearly adiabatically (i.e., without loss of heat), so as to reduce the formation of carbon (e.g., coke) on the surface of the gauze catalyst.

According to the present invention, the rate of feed of H₂S into the system is controlled and adjusted so that the heat generated by the oxidation of the H₂S is sufficient to maintain the desired temperature in reaction zone 20 and thus reduce the amount of the light hydrocarbon that is completely combusted. Hence, the mole ratio of H₂S to light hydrocarbon in the feed is preferably in the range of from about 1:10 to about 2:3. Where the light hydrocarbon is methane, a preferred ratio of H₂S to methane is 2:3.

The rapid heating of the feed gases as a result of contact with the hot catalyst promotes fast reaction rates. In accordance with the present invention, the feed gas stream velocity past catalyst structure 10 is preferably at least about 0.1 meter/second, often as high as 4-5 meters/second, and even as high as 70 meters/second. The maximum velocity will generally determined by the specific equipment used; however, the theoretical limit is that velocity at which the reaction would be extinguished. If an external means of heating the catalytic device 24 is used, this theoretical limit is significantly large.

According to one preferred embodiment, the feed gas stream velocity is between about 0.1 I and 100 meters/second As a result, the superficial contacts time of the feed gas stream with a preferred embodiment of gauze catalytic device 24 is less than about 10,000 microseconds, and typically within a range of about 1000-10,000 microseconds. When used in the present invention, it is preferred that the superficial contact time of the feed gas stream with the catalyst be less than about 5000 microseconds, more preferably less than about 2000 microseconds. Superficial contact time is inversely proportional to the term "space velocity" that is used in many chemical process descriptions.

Although for ease in comparison with prior art, space velocities at standard conditions have been used to describe the present invention, it is well recognized in the art that residence time is the inverse of space velocity and that the disclosure of high space velocities equates to low residence times.

From reaction zone 20, the reacted gases enter a firetube boiler 40, where they are cooled to below 450 °C and preferably to below 340 °C. As shown, it is preferred that heat removed from the partially oxidized gases can be recaptured in steam heating or the like. The rapid cooling that occurs in the boiler drops the temperature to below about 450° C and thus ceases the above reactions. A detailed description of the considerations involved in operating a reactor using millisecond contact times is given in U.S. Patent No. 5,654,491.

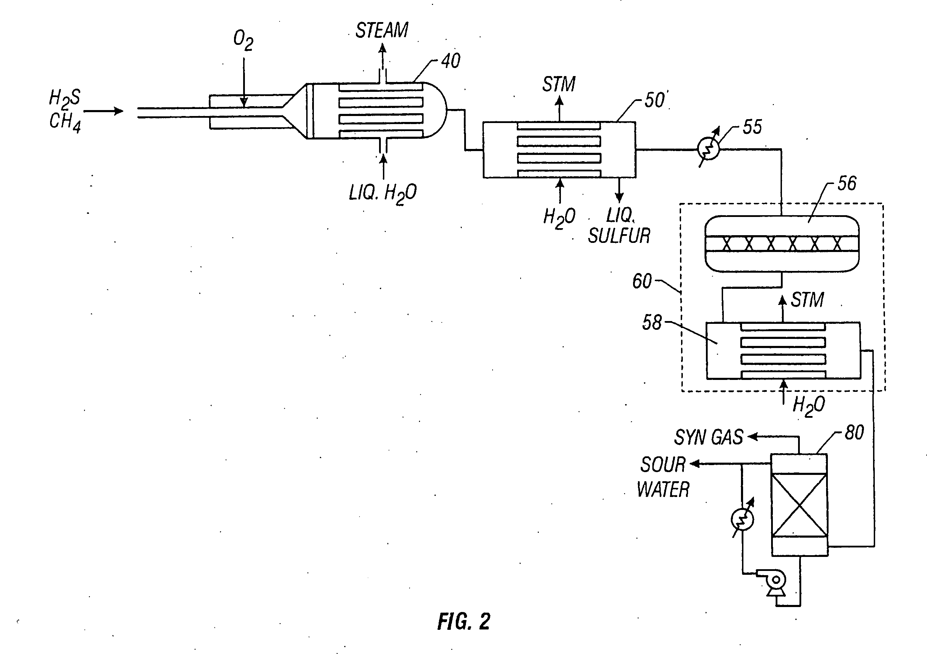

Accordingly, and referring now to Figure 2, the present system includes a firetube boiler 40 and preferably includes the synthesis gas reactor 10, a condenser 50, heater 55, a tailgas cleanup unit 60, a cooler 58, and a quench tower 80. The cooled, partially oxidized gases flow from boiler 40 into condenser 50, where they are cooled further until the dew point of the elemental sulfur is reached. This allows for the removal of elemental sulfur, as desired, from the process. Once the bulk of the elemental sulfur is removed, the partially oxidized gases are reheated in heater 55 and passed through a tailgas converter unit 60. Each tailgas converter unit 60 includes at least a sulfur absorbing material 56 in contact with the fluid. More specifically, in each converter unit 60, the hot gas stream is passed over a bed of zinc or iron oxide. In this bed, any elemental sulfur is converted to metal sulfide and retained in the bed.

The effluent from the sulfur absorber is then preferably cooled sufficiently to condense the bulk of any remaining water from the gas stream.

The treated gases, which comprise CO, hydrogen, and nitrogen, are then sent to a synthesis gas conversion unit such as a methanol plant or a Fischer-Tropsch plant.

By substituting the heat of the partial oxidation of H₂S for the combustion of methane, the present invention provides the heat necessary to maintain the syngas reaction at the desired temperature without giving up the methane to combustion products. This, in turn, results in a higher overall yield for the process.

While a preferred embodiment of the present invention has been shown and described, it will be understood that variations can be to the preferred embodiment, without departing from the scope of the present invention. For example, the mixing process can be altered or replaced with an active mixer, the thermal barrier can be modified, the structure and composition of the catalyst can be varied, and the tail gas treatment steps can be modified.

## Claims

1. A method for improving the yield of a syngas generation system, comprising providing a first gas stream containing a light hydrocarbon, mixing a second gas stream containing H₂S with the first gas stream to form a feed gas stream, mixing the feed gas stream with an oxygen containing stream to form a mixed feed stream, contacting the mixed feed stream with a hot catalyst to form a product stream, and removing syngas and elemental sulfur from the product stream.

2. The method according to claim 1 further comprising removing residual H₂S from the product stream.

3. The method according to claim 1 wherein mixing a second gas stream comprising H₂S with the first gas stream to form a feed gas stream is carried out at temperatures below 500 degrees C.

4. The method according to claim 1 wherein contacting the feed gas stream with a hot catalyst to form a product stream is carried out at temperatures above 500 degrees C.

5. The method according to claim 1 wherein less than 10% of the light hydrocarbon is converted to carbon dioxide.

6. The method according to claim 1 wherein the catalyst contact time is less than 0.01 seconds.

7. The method according to claim 1 wherein the catalyst is selected from the group consisting of platinum, rhodium, iridium, nickel, palladium, iron, cobalt, rhenium, rubidium, Pd-La₂O₃, Pt/ZrO₂, Pt/Al₂O₃ and combinations thereof.

8. A system for the partial oxidation of light hydrocarbons, comprising a hydrocarbon injection line; an H₂S injection line in communication with said hydrocarbon injection line; an oxygen injection line in communication with said hydrocarbon injection line; a reaction zone for receiving gases from said hydrocarbon, H₂S and oxygen injection lines and including a catalyst suitable for catalyzing the oxidation of said hydrocarbon to form CO and H₂ and for catalyzing the oxidation of said H₂S to form elemental sulfur and water; and additionally comprising a mixing zone upstream of said reaction zone for receiving gases from said hydrocarbon, oxygen and H₂S lines; a cooling zone comprising a firetube boiler downstream of said reaction zone; and a sulfur condenser downstream of said boiler.

9. The system according to claim 8 comprising a thermal barrier between said mixing zone and said reaction zone.

10. The system according to claim 8 comprising at least one tailgas processing unit downstream of said condenser.

11. The system according to claim 8 wherein said catalyst is supported on a wire gauze.

12. The system according to claim 8 wherein said catalyst is selected from the group consisting of: platinum, rhodium, iridium, nickel, palladium, iron , cobalt, rhenium, rubidium, Pd-La₂O₃, Pt/ZrO₂, Pt/Al₂O₃ and combinations thereof.

13. A method for improving the yield of a syngas generation system, comprising providing a first gas stream comprising a light hydrocarbon, mixing a second gas stream comprising H₂S with the first gas stream to form a feed gas stream, while maintaining said feed gas stream below 500 degrees C, contacting the feed gas stream with a hot catalyst to form a product stream wherein less than 10% of the light hydrocarbon is converted to carbon dioxide, and removing syngas and elemental sulfur from the product stream.

14. The method according to claim 13 comprising mixing oxygen with the light hydrocarbon prior to contacting the feed gas stream with a hot catalyst.

15. The method according to claim 13 comprising mixing oxygen with the light hydrocarbon during the contacting of the feed gas stream with a hot catalyst.

16. The method according to any one of claims 1 to 7 or 13 to 15 that is carried out using the system of any one of claims 8 to 12.

## Patentansprüche

1. Verfahren zur Verbesserung der Ausbeute eines Synthesegaserzeugungssystems, umfassend das Bereitstellen eines ersten Gasstromes enthaltend einen leichten Kohlenwasserstoff, Mischen eines zweiten Gasstromes enthaltend H₂S mit dem ersten Gasstrom, um einen Einsatzgasstrom zu bilden, Mischen des Einsatzgasstroms mit einem sauerstoffhaltigen Strom, um einen gemischten Einsatzstrom zu bilden, In-Kontakt-bringen des gemischten Einsatzstroms mit einem heißen Katalysator, um einen Produktstrom zu erzeugen, und Entfernen des Synthesegases und elementaren Schwefels aus dem Produktstrom.

2. Verfahren nach Anspruch 1, des Weiteren umfassend das Entfernen von restlichem H₂S aus dem Produktstrom.

3. Verfahren nach Anspruch 1, wobei das Mischen eines zweiten Gasstromes umfassend H₂S mit dem ersten Gasstrom um einen Einsatzgasstrom zu bilden, bei Temperaturen unter 500°C durchgeführt wird.

4. Verfahren nach Anspruch 1, wobei das In-Kontakt-bringen des Einsatzgasstroms mit einem heißen Katalysator um einen Produktstrom zu bilden, bei Temperaturen oberhalb 500°C durchgeführt wird.

5. Verfahren nach Anspruch 1, wobei weniger als 10% des leichten Kohlenwasserstoffes in Kohlenstoffdioxid umgewandelt wird.

6. Verfahren nach Anspruch 1, wobei die Katalysatorkontaktdauer weniger als 0,01 Sekunden beträgt.

7. Verfahren nach Anspruch 1, wobei der Katalysator gewählt ist aus der Gruppe bestehend aus Platin, Rhodium, Iridium, Nickel, Palladium, Eisen, Kobalt, Rhenium, Rubidium, Pd-La₂O₃, Pt/ZrO₂, Pt/Al₂O₃ und deren Kombinationen.

8. System zur teilweisen Oxidation leichter Kohlenwasserstoffe, umfassend eine Kohlenwasserstoffeinspritzleitung, eine H₂S-Einspritzleitung in Verbindung mit der Kohlenwasserstoffeinspritzleitung; eine Sauerstoffeinspritzleitung in Verbindung mit der Kohlenwasserstoffeinspritzleitung; eine Reaktionszone um Gase aus den Kohlenwasserstoff-, H₂S- und Sauerstoffeinspritzleitungen zu erhalten und enthaltend einen Katalysator, welcher geeignet ist, die Oxidation des Kohlenwasserstoffs zu katalysieren, um CO und H₂ zu bilden, und um die Oxidation des H₂S zu katalysieren, um elementaren Schwefel und Wasser zu bilden, und zusätzlich umfassend eine Mischzone stromaufwärts der Reaktionszone, um Gase aus den Kohlenwasserstoff-, Sauerstoff- und H₂S zu erhalten; eine Kühlzone umfassend einen Flammrohrkessel stromabwärts der Reaktionszone; und einen Schwefelkondensator stromabwärts des Kessels.

9. System nach Anspruch 8 umfassend eine thermische Barriere zwischen der Mischzone und der Reaktionszone.

10. System nach Anspruch 8 umfassend wenigstens eine Tailgasverarbeitungseinheit stromabwärts des Kondensators.

11. System nach Anspruch 8, wobei der Katalysator auf einem Drahtgewebe getragen ist.

12. System nach Anspruch 8, wobei der Katalysator aus der Gruppe gewählt ist, bestehend aus: Platin, Rhodium, Iridium, Nickel, Palladium, Eisen, Kobalt, Rhenium, Rubidium, Pd-La₂O₃, Pt/ZrO₂, Pt/Al₂O₃ und deren Kombinationen.

13. Verfahren zur Verbesserung der Ausbeute eines Synthesegaserzeugungssystems, umfassend das Bereitstellen eines ersten Gasstromes umfassend einen leichten Kohlenwasserstoff, Mischen eines zweiten Gasstroms umfassend H₂S mit dem ersten Gasstrom, um einen Einsatzgasstrom zu formen, während der Einsatzgasstrom unter 500°C gehalten wird, In-Kontakt-bringen des Einsatzgasstroms mit einem heißen Katalysator, um einen Produktstrom zu formen, wobei weniger als 10% des leichten Kohlenwasserstoffs zu Kohlenstoffdioxid umgewandelt werden und Entfernen des Synthesegases und elementaren Schwefels aus dem Produktstrom.

14. Verfahren nach Anspruch 13 umfassend das Mischen von Sauerstoff mit dem leichten Kohlenwasserstoff vor dem In-Kontakt-bringen des Einsatzgasstroms mit einem heißen Katalysator.

15. Verfahren nach Anspruch 13 umfassend das Mischen von Sauerstoff mit dem leichten Kohlenwasserstoff während des In-Kontakt-bringens des Einsatzgasstroms mit einem heißen Katalysator.

16. Verfahren nach einem der Ansprüche 1 bis 7 oder 13 bis 15, welches unter Verwendung des Systems nach einem der Ansprüche 8 bis 12 durchgeführt wird.

## Revendications

1. Procédé pour améliorer le rendement d'un système de production de gaz de synthèse, comprenant la fourniture d'un premier courant gazeux contenant un hydrocarbure léger, le mélange d'un second courant gazeux contenant du H₂S au premier courant gazeux pour former un courant gazeux d'alimentation, le mélange du courant d'alimentation à un courant contenant de l'oxygène pour former un courant d'alimentation mixte, la mise en contact du courant d'alimentation mixte avec un catalyseur chaud pour former un courant de produit, et la séparation du gaz du synthèse et du soufre élémentaire du courant de produit.

2. Procédé suivant la revendication 1, comprenant en outre l'élimination du H₂S résiduel du courant de produit.

3. Procédé suivant la revendication 1, dans lequel le mélange d'un second courant gazeux comprenant du H₂S au premier courant gazeux pour former un courant gazeux d'alimentation est effectué à des températures inférieures à 500°C.

4. Procédé suivant la revendication 1, dans lequel la mise en contact du courant gazeux d'alimentation avec un catalyseur chaud pour former un courant de produit est effectuée à des températures supérieures à 500°C.

5. Procédé suivant la revendication 1, dans lequel moins de 10 % de l'hydrocarbure léger sont convertis en dioxyde de carbone.

6. Procédé suivant la revendication 1, dans lequel le temps de contact du catalyseur est inférieur à 0,01 seconde.

7. Procédé suivant la revendication 1, dans lequel le catalyseur est choisi dans le groupe consistant en le platine, le rhodium, l'iridium, le nickel, le palladium, le fer, le cobalt, le rhénium, le rubidium, le Pd-La₂O₃, le Pt/ZrO₂, le Pt/Al₂O₃ et leurs associations.

8. Système pour l'oxydation partielle d'hydrocarbures légers, comprenant un conduit d'injection d'hydrocarbure ; un conduit d'injection de H₂S en communication avec ledit conduit d'injection d'hydrocarbure ; un conduit d'injection d'oxygène en communication avec ledit conduit d'injection d'hydrocarbure ; une zone réactionnelle destinée à recevoir les gaz provenant desdits conduits d'injection d'hydrocarbure, de H₂S et d'oxygène et comprenant un catalyseur convenable pour catalyser l'oxydation dudit hydrocarbure afin de former CO et H₂ et pour catalyser l'oxydation dudit H₂S pour former du soufre élémentaire et de l'eau ; et comprenant en outre une zone de mélange en amont de ladite zone réactionnelle pour recevoir les gaz provenant desdits conduits d'hydrocarbure, d'oxygène et de H₂S ; une zone de refroidissement comprenant une chaudière à tube de flamme en aval de ladite zone réactionnelle ; et un condenseur de soufre en aval de ladite chaudière.

9. Système suivant la revendication 8, comprenant une barrière thermique entre ladite zone de mélange et ladite zone réactionnelle.

10. Système suivant la revendication 8, comprenant au moins une unité de traitement de gaz de queue en aval dudit condenseur.

11. Système suivant la revendication 8, dans lequel ledit catalyseur est porté par une toile métallique.

12. Système suivant la revendication 8, dans lequel ledit catalyseur est choisi dans le groupe consistant en : le platine, le rhodium, l'iridium, le nickel, le palladium, le fer, le cobalt, le rhénium, le rubidium, le Pd-La₂O₃, le Pt/ZrO₂, le Pt/Al₂O₃ et leurs associations.

13. Procédé pour améliorer le rendement d'un système de production de gaz de synthèse, comprenant la fourniture d'un premier courant gazeux comprenant un hydrocarbure léger, le mélange d'un second courant gazeux comprenant du H₂S au premier courant gazeux pour former un courant gazeux d'alimentation, tout en maintenant ledit courant gazeux d'alimentation à une température inférieure à 500°C, la mise en contact du courant gazeux d'alimentation avec un catalyseur chaud pour former un courant de produit dans lequel moins de 10 % de l'hydrocarbure léger sont convertis en dioxyde de carbone, et la séparation du gaz de synthèse et du soufre élémentaire du courant de produit.

14. Procédé suivant la revendication 13, comprenant le mélange d'oxygène à l'hydrocarbure léger avant la mise en contact du courant gazeux d'alimentation avec un catalyseur chaud.

15. Procédé suivant la revendication 13, comprenant le mélange d'oxygène à l'hydrocarbure léger au cours de la mise en contact du courant gazeux d'alimentation avec un catalyseur chaud.

16. Procédé suivant l'une quelconque des revendications 1 à 7 ou 13 à 15, qui est mis en oeuvre en utilisant le système de l'une quelconque des revendications 8 à 12.
